# EUROPEAN PATENT SPECIFICATION

(11) **EP 4 592 148 B1**
(45) Date of publication and mention of the grant of the patent: **22.04.2026**
(21) Application number: 25150920.4
(22) Date of filing: 09.01.2025
(51) Int. Cl.: B60S 1/34

(54) **WIPER DEVICE**
WISCHVORRICHTUNG
DISPOSITIF D'ESSUIE-GLACE

(30) Priority: 22.01.2024 JP 2024007632
(43) Date of publication of application: 30.07.2025
(73) Proprietor: Mitsuba Corporation, Kiryu-shi, Gunma 376-8555 (JP)
(72) Inventor: NAKAJIMA, Nobutaka, Kiryu-shi, Gunma, 3768555 (JP); KOGUCHI, Yasuaki, Kiryu-shi, Gunma, 3768555 (JP); SODA, Toru, Kiryu-shi, Gunma, 3768555 (JP)
(74) Representative: Kurig, Thomas

(56) References cited:
- EP-A1- 0 755 833
- EP-A1- 1 514 752
- EP-B1- 2 864 161
- DE-A1- 4 204 125
- US-A1- 2014 182 077
- US-A1- 2015 360 648

## Description

### BACKGROUND

### Technical Field

The disclosure relates to a wiper device that includes a wiper blade wiping a wiping surface and is swung by a swing shaft.

### Related Art

Patent Document 1 describes a wiper arm mounted on a vehicle such as an automobile. The wiper arm includes: an arm head body fixed to a drive shaft; a retainer rotatably linked to the arm head body; and a rotation restriction member provided between the arm head body and the retainer. The rotation restriction member has a function of restricting a rotation angle of the retainer with respect to the arm head body so as not to significantly stand the retainer up with respect to the arm head body.

Patent Document 2 discloses a wiper device according to the preamble of claim 1.

### Related Art Documents

### Patent Documents

[Patent Document 1] Japanese Patent Application Laid-Open No. 2014-101059.
[Patent Document 2] DE 42 04 125 A1.

### SUMMARY

### Problem to Be Solved

However, in the art described in Patent Document 1, it is required to provide a separate rotation restriction member between the retainer and the arm head body, which leads to an increase in the number of components. In addition, the retainer cannot be held with respect to the arm head body by a rotation angle close to the state in which the rotation angle is restricted by the rotation restriction member.

An objective of the disclosure is to provide a wiper device capable of restricting a rotation angle of an arm shank with respect to an arm head, and capable of holding the arm shank with respect to the arm head by a rotation angle close to a state in which the rotation angle is restricted, without increasing the number of components.

### Means for Solving Problem

In an aspect of a wiper device, the wiper device includes: an arm head fixed to a swing shaft; an arm shank having a base end side rotatably mounted to the arm head; and a wiper blade mounted to a tip side of the arm shank and wiping a wiping surface. The wiper device further includes: a head-side mating part provided at the arm head and recessed or protruding toward at least one side in a wiping direction of the wiper blade; and a shank-side mating part provided at the arm shank and protruding or recessed toward at least another side in the wiping direction of the wiper blade. By concave-convex mating of the head-side mating part and the shank-side mating part with each other, the arm shank is restricted from rotating by a first rotation angle or more with respect to the arm head, and a state in which the arm shank stands up by a second rotation angle smaller than the first rotation angle with respect to the arm head is maintained.

### Effects

According to the disclosure, it is possible to realize a wiper device capable of restricting the rotation angle of the arm shank with respect to the arm head, and capable of holding the arm shank with respect to the arm head by a rotation angle close to the state in which the rotation angle is restricted, without increasing the number of components.

### BRIEF DESCRIPTION OF THE DRAWINGS

FIG. 1 is a view of a wiper device viewed from a surface side.
FIG. 2 is a view of the wiper device viewed from a lateral side.
FIG. 3 is a view of the wiper device viewed from a back side.
FIG. 4 is a cross-sectional view along line A-A in FIG. 1.
FIG. 5 is a perspective view showing an arm shank and a wiper blade.
FIG. 6 is an enlarged perspective view of a base end side of the arm shank.
FIG. 7 is a perspective view of an arm head viewed from the surface side.
FIG. 8 is a perspective view of the arm head viewed from the back side.
FIG. 9 is an enlarged view of a broken line circle B part in FIG. 7.
FIG. 10 is a cross-sectional view when the wiper device is in a lock-back holding state.
FIG. 11 is a cross-sectional view along line C-C in FIG. 10.
FIG. 12 is a view showing a relationship between a shank-side protrusion and a head-side recess in the lock-back holding state.
FIG. 13 is a view corresponding to FIG. 11 when the wiper device is in a rotation restriction state.
FIG. 14 is a view corresponding to FIG. 12 when the wiper device is in the rotation restriction state.

### DESCRIPTION OF THE EMBODIMENTS

Hereinafter, an embodiment of the disclosure will be described in detail with reference to the drawings.

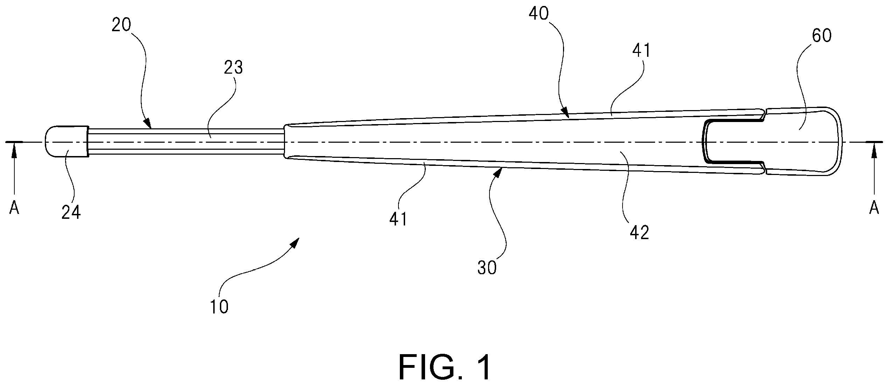

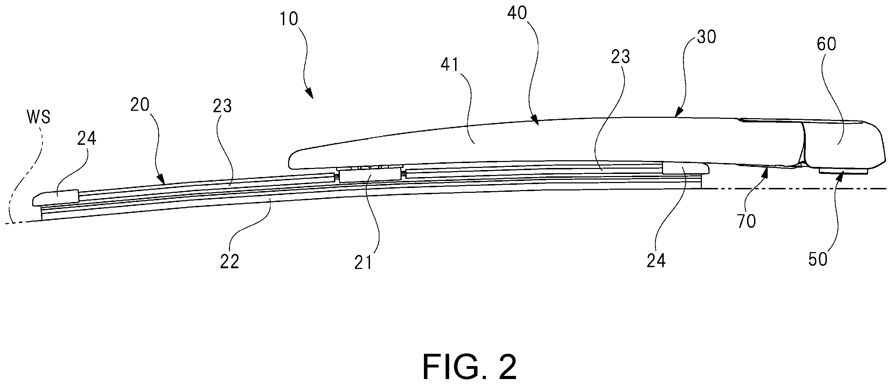

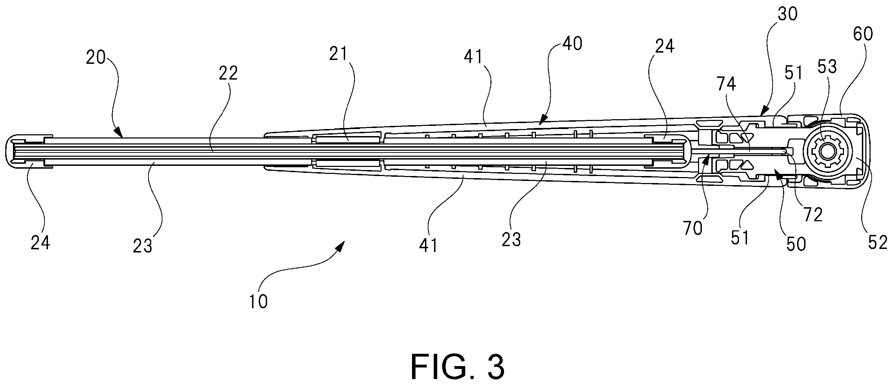

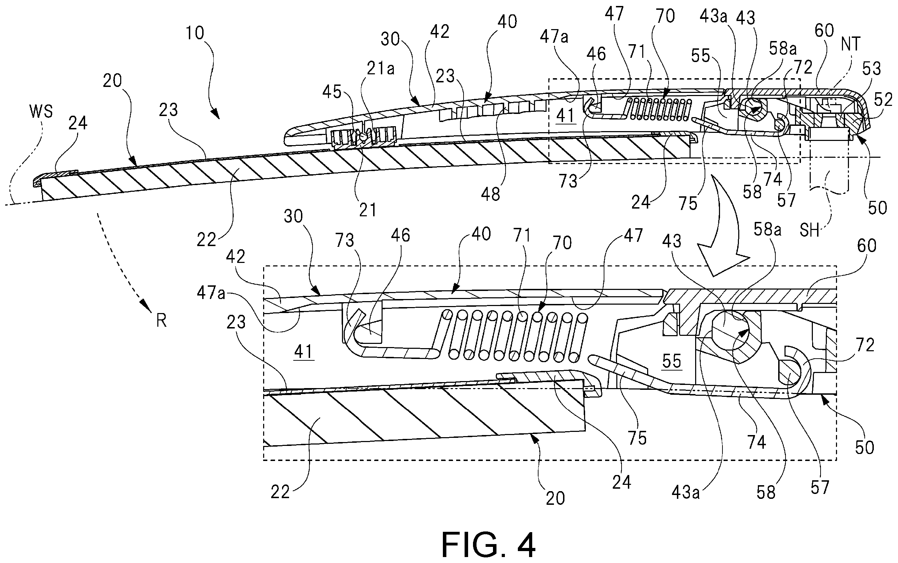

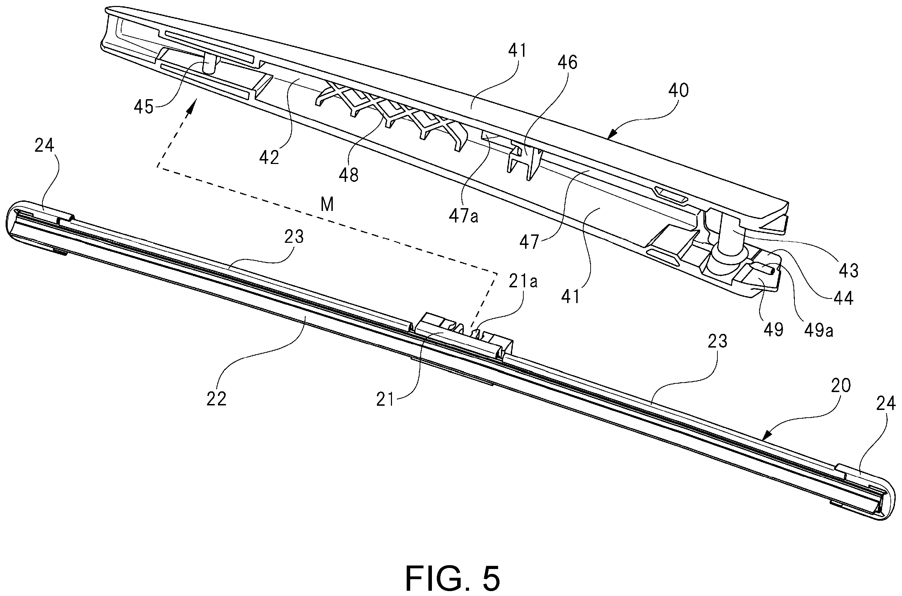

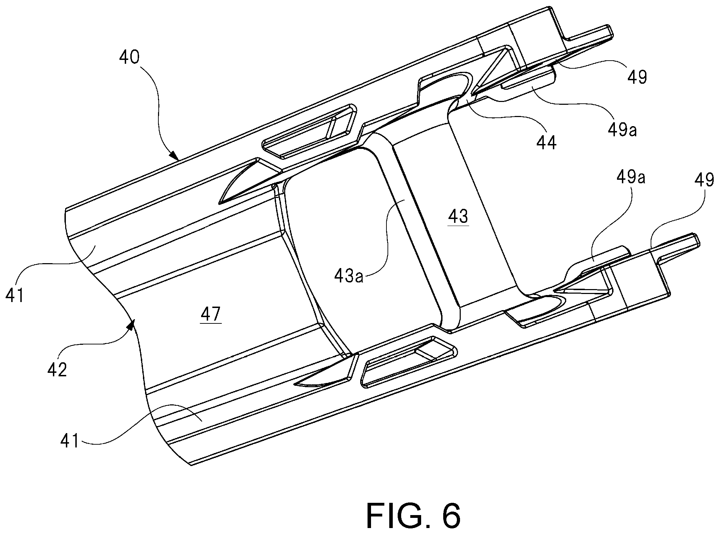

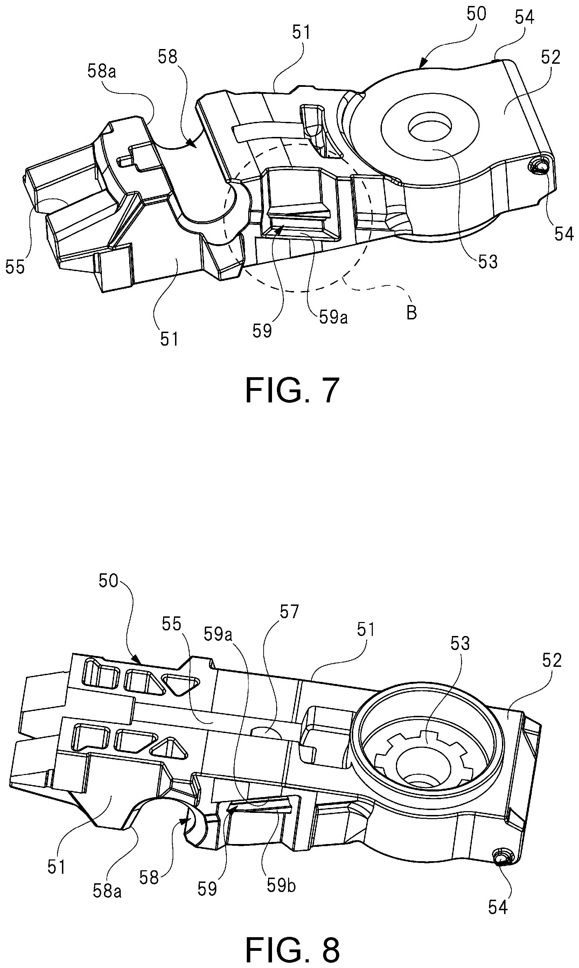

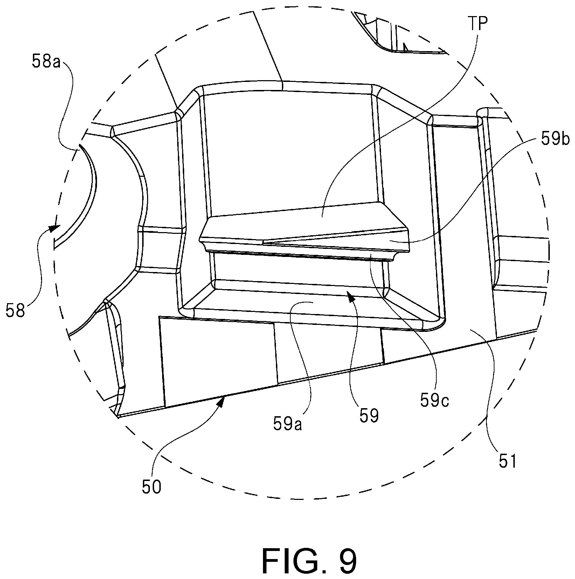

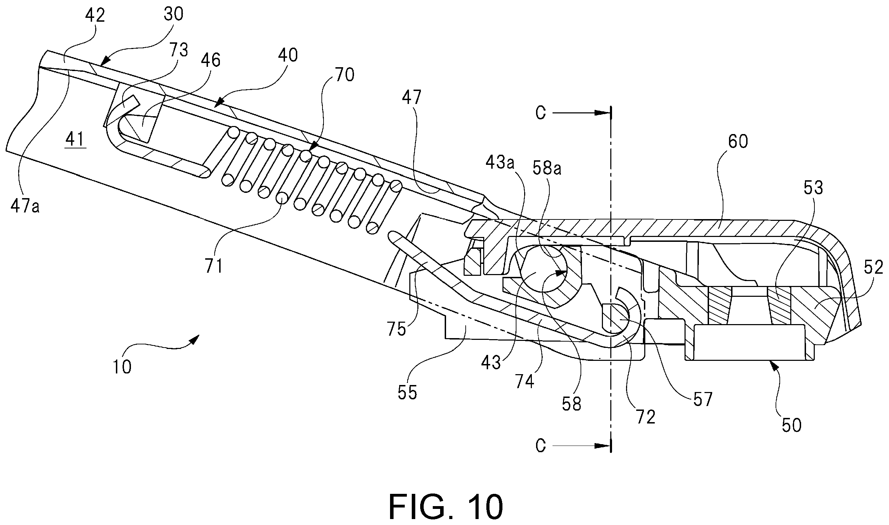

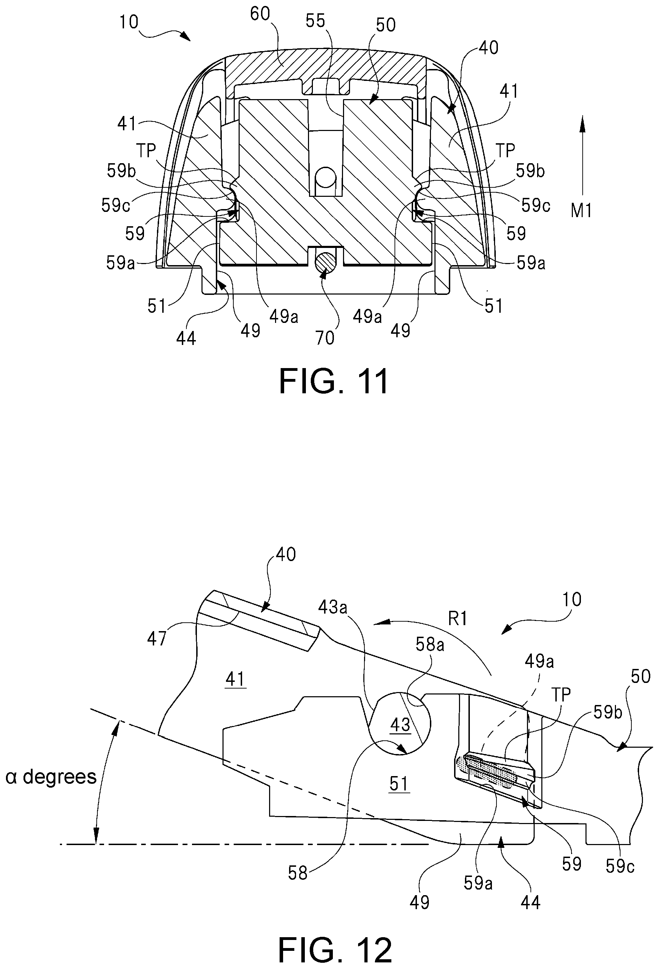

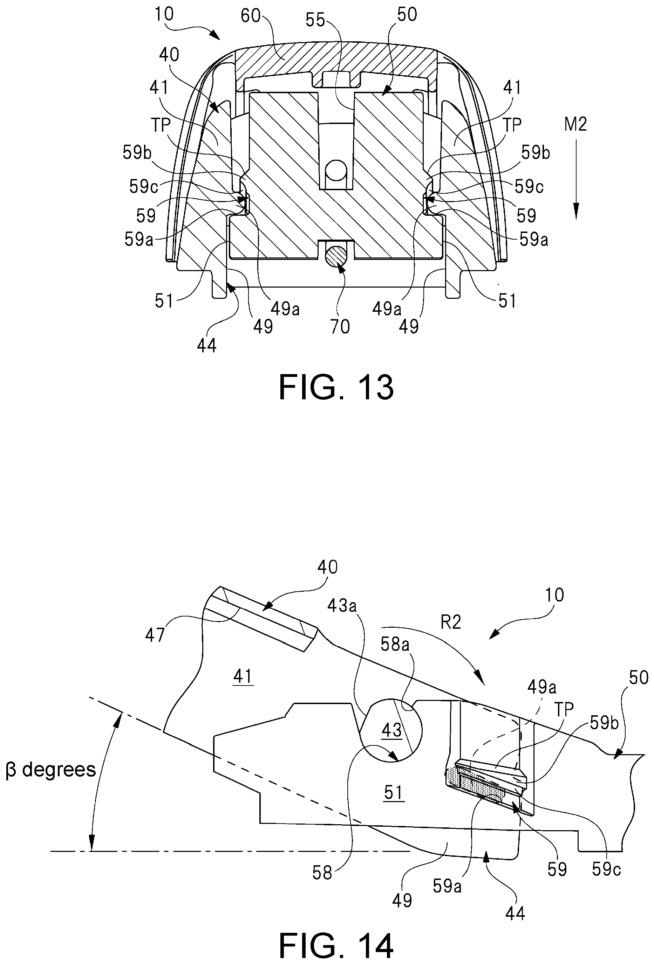

FIG. 1 shows a view of a wiper device viewed from a surface side. FIG. 2 shows a view of the wiper device viewed from a lateral side. FIG. 3 shows a view of the wiper device viewed from a back side. FIG. 4 shows a cross-sectional view along line A-A in FIG. 1. FIG. 5 shows a perspective view of an arm shank and a wiper blade. FIG. 6 shows an enlarged perspective view of a base end side of the arm shank. FIG. 7 shows a perspective view of an arm head viewed from the surface side. FIG. 8 shows a perspective view of the arm head viewed from the back side. FIG. 9 shows an enlarged view of a broken line circle B part in FIG. 7. FIG. 10 shows a cross-sectional view when the wiper device is in a lock-back holding state. FIG. 11 shows a cross-sectional view along line C-C in FIG. 10. FIG. 12 shows a view of a relationship between a shank-side protrusion and a head-side recess in the lock-back holding state. FIG. 13 shows a view corresponding to FIG. 11 when the wiper device is in a rotation restriction state. FIG. 14 shows a view corresponding to FIG. 12 when the wiper device is in the rotation restriction state.

### [Overview of wiper device]

A wiper device 10 shown in FIG. 1 to FIG. 4 serves to wipe a windshield (wiping surface WS) provided at a back door of a vehicle such as an automobile. The wiper device 10 includes a wiper blade 20 that wipes the wiping surface WS, and a wiper arm 30 to which the wiper blade 20 is mounted.

A base end side (right side in FIG. 1 to FIG. 4) of the wiper arm 30 is fixed by a fastening nut NT to a tip side of a swing shaft SH of a rear wiper motor (not shown) accommodated inside the back door. Accordingly, the swing shaft SH swings by driving of the rear wiper motor, and thus the wiper arm 30 and the wiper blade 20 swing on the wiping surface WS.

The wiper blade 20 is mounted to a tip side (left side in FIG. 1 to FIG. 4) of the wiper arm 30. The wiper blade 20 includes a linkage member 21 that is rotatably mounted to the tip side of the wiper arm 30, and a blade rubber 22 that is held by the linkage member 21.

Herein, the blade rubber 22 is formed into an elongated shape by extrusion molding of natural rubber or the like, and is held to the linkage member 21 via a pair of plate springs (not shown) also called vertebrae. In addition, covers 23 covering a back surface side of the pair of plate springs and the blade rubber 22 are respectively provided on both sides in a long-side direction of the linkage member 21. Furthermore, end caps 24 are respectively mounted to both sides in the long-side direction of the pair of plate springs and the blade rubber 22. Accordingly, the blade rubber 22 is prevented from falling out of the pair of plate springs.

The blade rubber 22 is pressed to the wiping surface WS by a spring force of a tension spring 70 (refer to FIG. 4) provided on an inner side the wiper arm 30. The wiper blade 20 performs a reciprocating wiping action over a predetermined wiping range (not shown) on the wiping surface WS by a swing motion of the wiper arm 30. Accordingly, rainwater, dust, etc. adhering to the wiping surface WS are wiped off.

Herein, as shown in FIG. 1 to FIG. 4, the wiper arm 30 includes an arm shank 40, an arm head 50, a cover member 60, and a tension spring 70.

### [Arm shank]

As shown in FIG. 4 to FIG. 6, the arm shank 40 is formed by injection molding of a resin material such as plastic into a substantially rod shape which is tapered. A cross-section of the arm shank 40 along a direction orthogonal to a long-side direction thereof is formed into a substantially U-shape, and the arm shank 40 includes a pair of sidewall parts 41. The sidewall parts 41 are disposed to be opposed to each other on both sides in a wiping direction (up-down direction in FIG. 1 and FIG. 3) of the wiper blade 20, i.e., on both sides in a short-side direction of the arm shank 40.

In addition, the arm shank 40 includes one top wall part 42. Specifically, the top wall part 42 is provided on a side opposite to the wiping surface WS side of the pair of sidewall parts 41, and connects the pair of sidewall parts 41 to each other. In other words, the pair of sidewall parts 41 are respectively integrally provided on both sides in the short-side direction of the top wall part 42.

A linkage shaft 43 rotatably mounted to the arm head 50 is integrally provided on an inner side of the arm shank 40 surrounded by the pair of sidewall parts 41 and the one top wall part 42, on a base end side (right side in FIG. 5 and FIG. 6) of the arm shank 40. In other words, the base end side of the arm shank 40 is rotatably mounted to the arm head 50. Specifically, the linkage shaft 43 extends in the short-side direction of the arm shank 40, and both axial sides of the linkage shaft 43 are respectively connected to the pair of sidewall parts 41. In addition, the linkage shaft 43 is disposed at a spot of a notch part 44 provided on the base end side of the top wall part 42.

Furthermore, as shown in FIG. 4, the linkage shaft 43 forms a shape in which a part of an outer circumferential part of a cylinder is cut out, such that a cross-section in the long-side direction of the arm shank 40 forms a substantially D-shape. In other words, the linkage shaft 43 has a planar part 43a and forms a so-called D-cut shape. Accordingly, the linkage shaft 43 is capable of being easily mounted to a linkage recess 58 of the arm head 50.

In addition, a mounting shaft 45 to which the linkage member 21 of the wiper blade 20 is rotatably mounted is integrally provided on the inner side of the arm shank 40, on the tip side (left side in FIG. 4 and FIG. 5) of the arm shank 40. In other words, a long-side direction central part of the wiper blade 20 is rotatably mounted on the tip side of the arm shank 40. Specifically, similar to the linkage shaft 43, the mounting shaft 45 extends in the short-side direction of the arm shank 40, and both axial sides of the mounting shaft 45 are respectively connected to the pair of sidewall parts 41.

The mounting shaft 45 is formed into a substantially cylindrical shape, and as indicated by a broken line arrow M in FIG. 5, a linkage part 21a provided at the linkage member 21 is capable of being mounted to the mounting shaft 45 in a one-touch manner by a so-called snap fit. In other words, the wiper blade 20 is capable of being easily attached to and detached from the arm shank 40 and is excellent in maintainability.

Furthermore, a shank-side engagement part 46 with which a tip side (left side in FIG. 4) of the tension spring 70 is engaged is integrally provided on the inner side of the arm shank 40, between the linkage shaft 43 and the mounting shaft 45 in the long-side direction of the arm shank 40. Specifically, the shank-side engagement part 46 is provided between the pair of sidewall parts 41 and is fixed to three spots, i.e., the sidewall parts 41 and the one top wall part 42. Accordingly, sufficient strength of the shank-side engagement part 46 is ensured.

The shank-side engagement part 46 is disposed close to the top wall part 42 in a height direction (up-down direction in FIG. 4) of the arm shank 40. In other words, the shank-side engagement part 46 is disposed at a deep portion on the inner side of the arm shank 40. Accordingly, the tip side of the tension spring 70 is also disposed close to the top wall part 42.

A base end side (right side in FIG. 4) of the tension spring 70 is engaged with a head-side engagement part 57 (refer to FIG. 4 and FIG. 8) of the arm head 50. Herein, the head-side engagement part 57 is disposed closer to the wiping surface WS than the shank-side engagement part 46 in the height direction (up-down direction in FIG. 4) of the arm shank 40. Accordingly, as shown in FIG. 4, the tension spring 70 is engageable with each of the shank-side engagement part 46 and the head-side engagement part 57 while avoiding the linkage shaft 43 and the linkage recess 58.

Herein, the tension spring 70 is provided between the arm head 50 and the arm shank 40, and generates a spring force pressing the wiper blade 20 toward the wiping surface WS. As shown in FIG. 4, the tension spring 70 includes a coil part 71, a first hook part 72 engaged with the head-side engagement part 57, and a second hook part 73 engaged with the shank-side engagement part 46. In addition, a straight part 74 extending in an extending direction of the arm shank 40 and an inclined part 75 inclined with respect to the straight part 74 are provided between the coil part 71 and the first hook part 72.

By providing the straight part 74 and the inclined part 75 at the tension spring 70, as shown in FIG. 4 and FIG. 10, the tension spring 70 can be substantially hidden on the inner side of the arm shank 40.

The tension spring 70 corresponds to a spring in the disclosure.

In addition, as shown in FIG. 4 to FIG. 6, a spring accommodating recess 47 is provided on the inner side of the arm shank 40, on the base end side (arm head 50 side) of the top wall part 42.

The spring accommodating recess 47 extends in the long-side direction of the arm shank 40, and a length dimension of the spring accommodating recess 47 is approximately half a length dimension of the top wall part 42. In addition, the spring accommodating recess 47 is recessed by a predetermined depth from the inner side to an outer side of the arm shank 40. Specifically, a thickness dimension of a portion of the top wall part 42 at which the spring accommodating recess 47 is provided is approximately half a thickness dimension of the portion of the top wall part 42 at which the spring accommodating recess 47 is not provided.

A tip side (left side in FIG. 4 and FIG. 5) of the spring accommodating recess 47 is provided with a taper part 47a that gently slopes from the portion of the top wall part 42 at which the spring accommodating recess 47 is provided toward the portion of the top wall part 42 at which the spring accommodating recess 47 is not provided. Accordingly, stress concentration is suppressed on the tip side of the spring accommodating recess 47 in the top wall part 42.

The shank-side engagement part 46 is disposed in a region of the spring accommodating recess 47 in the long-side direction of the arm shank 40, in the vicinity of the taper part 47a. In other words, the portion of the top wall part 42 at which the shank-side engagement part 46 is provided is thinned, but sufficient rigidity is ensured. Thus, the shank-side engagement part 46 can be disposed closer to the top wall part 42.

Accordingly, as shown in FIG. 10, when the arm shank 40 is raised with respect to the arm head 50, a part of the coil part 71 of the tension spring 70 is accommodated in the spring accommodating recess 47 without contacting the top wall part 42.

In addition, a reinforcing rib 48 is provided on the inner side of the arm shank 40, between the taper part 47a and the mounting shaft 45 in the long-side direction of the top wall part 42. The reinforcing rib 48 protrudes toward the inner side of the arm shank 40 and is in a substantially mesh pattern. Specifically, the reinforcing rib 48 is fixed to three spots, i.e., the pair of sidewall parts 41 and the one top wall part 42.

Accordingly, rigidity can be sufficiently ensured at portions of the arm shank 40 at which the reinforcing rib 48 is provided. Herein, the shank-side engagement part 46 is provided in the vicinity of the reinforcing rib 48. Thus, deformation is effectively suppressed at a portion of the arm shank 40 at which the shank-side engagement part 46 is provided, i.e., at a portion that is relatively prone to bearing a load.

Furthermore, as shown in FIG. 5, FIG. 6, and FIG. 11 to FIG. 14, a pair of inner surface parts 49 opposed to a pair of lateral surface parts 51 provided at the arm head 50 are provided on the base end sides (notch part 44 sides) of the pair of sidewall parts 41. Specifically, the pair of inner surface parts 49 are respectively opposed to the pair of lateral surface parts 51 on both sides in the wiping direction (left-right direction in FIG. 11 and FIG. 13) of the wiper blade 20.

Lock claws 49a are integrally provided respectively at the pair of inner surface parts 49. The pair of lock claws 49a protrude by a predetermined height respectively toward the inner side (arm head 50 side) of the sidewall parts 41, and are disposed opposed to each other in a direction (left-right direction in FIG. 11 and FIG. 13) in which the linkage shaft 43 extends. In other words, the pair of lock claws 49a respectively protrude on both sides in the wiping direction of the wiper blade 20. In addition, the lock claw 49a extends in the long-side direction of the sidewall part 41, and a cross-section of the lock claw 49a in a direction orthogonal to the long-side direction of the sidewall part 41 forms a substantially semi-circular shape.

The pair of lock claws 49a provided at the arm shank 40 form protruding shapes respectively protruding toward both sides in the wiping direction of the wiper blade 20, and correspond to shank-side mating parts and protrusions in the disclosure.

The lock claws 49a are capable of respectively entering inner sides of lock grooves 59 (refer to FIG. 9) provided at the pair of lateral surface parts 51 forming the arm head 50. Specifically, as shown in FIG. 11 to FIG. 14, the lock claws 49a are capable of mating with the lock grooves 59 when the arm shank 40 is raised with respect to the arm head 50.

Herein, by concave-convex mating of the lock claws 49a and the lock grooves 59 with each other, the arm shank 40 is restricted from rotating with respect to the arm head 50 by β degrees (refer to FIG. 14) or more, and a state in which the arm shank 40 stands up by α degrees (refer to FIG. 12), which is smaller than β degrees, with respect to the arm head 50 is maintained (β degrees > α degrees).

The β degrees shown in FIG. 14 corresponds to a first rotation angle in the disclosure, and the α degrees shown in FIG. 12 corresponds to a second rotation angle in the disclosure.

Herein, the configuration of the rotation angle of the arm shank 40 with respect to the arm head 50 into α degrees and β degrees, i.e., a rotation action of the arm shank 40 with respect to the arm head 50, will be described in detail later.

Furthermore, in the case of releasing the state in which the arm shank 40 stands up by α degrees with respect to the arm head 50, i.e., releasing the lock-back holding state of the wiper device 10, to return the wiper device 10 to an in-use state, the arm shank 40 may be simply pressed down toward the wiping surface WS with a predetermined force. Accordingly, the lock claws 49a detach from the lock grooves 59 to release the mated state between the two.

### [Arm head]

As shown in FIG. 7 to FIG. 9, the arm head 50 is formed into a substantially rectangular parallelepiped shape by injection molding of a resin material such as plastic, and extends in the long-side direction of the wiper arm 30 (refer to FIG. 3). The arm head 50 includes a pair of lateral surface parts 51 oriented respectively toward both sides in the wiping direction (up-down direction in FIG. 1 and FIG. 3) of the wiper blade 20.

In addition, a fixed body 52 is provided on the base end side (right side in FIG. 7 and FIG. 8) of the arm head 50. As shown in FIG. 4, the fixed body 52 is a portion that is fixed to the swing shaft SH by the fastening nut NT, and a reinforcing member 53 in an annular shape is inserted (embedded) in the fixed body 52.

The reinforcing member 53 is made of aluminum and has a function of reinforcing the fixed body 52 made of resin. Specifically, the swing shaft SH is inserted through the reinforcing member 53, and a tightening force of the fastening nut NT is applied to the reinforcing member 53. Accordingly, the arm head 50 is capable of being firmly fixed to the swing shaft SH, which is driven to swing, by the fastening nut NT without rattling.

As shown in FIG. 7 and FIG. 8, a pair of protrusions 54 are provided on the base end side of the arm head 50. The protrusions 54 are respectively provided at the pair of lateral surface parts 51 forming the arm head 50. Specifically, the protrusions 54 respectively protrude by a predetermined height from the lateral surface parts 51 to both sides in the wiping direction of the wiper blade 20. The cover member 60 is rotatably mounted to the protrusions 54. In other words, the cover member 60 is capable of being opened and closed with respect to the arm head 50, taking the pair of protrusions 54 as a rotation center.

Herein, as shown in FIG. 4, upon configuring the cover member 60 in a closed state, the cover member 60 conceals the fastening nut NT. Accordingly, the appearance of the wiper device 10 is improved. On the other hand, upon configuring the cover member 60 in an opened state, the fastening nut NT is exposed to outside. Thus, a fastening tool (not shown) may be used, and it becomes possible to tighten or loosen the fastening nut NT.

In addition, as shown in FIG. 4, FIG. 7, and FIG. 8, a groove part 55 is provided on the tip side (left side in the figures) of the arm head 50 to extend along the long-side direction of the arm head 50. The groove part 55 is disposed at a short-side direction central part (wiping direction central part of the wiper blade 20) of the arm head 50, and is disposed at a portion of the arm head 50 excluding the fixed body 52.

As shown in FIG. 4, a base end side (right side in FIG. 4) of the tension spring 70 enters the groove part 55. The tension spring 70 is in a non-contact state with respect to the groove part 55 (refer to FIG. 11 and FIG. 13). Accordingly, the tension spring 70 does not need to project significantly to the wiping surface WS side compared to the arm head 50. Thus, an overall height of the wiper device 10 is suppressed to be low.

The head-side engagement part 57 formed into a substantially cylindrical shape is integrally provided on the inner side of the groove part 55. Specifically, the head-side engagement part 57 is disposed at a long-side direction central part of the arm head 50, in the vicinity of the fixed body 52. In addition, the head-side engagement part 57 is disposed to cross the inside of the groove part 55 in the short-side direction (wiping direction of the wiper blade 20) of the arm head 50. Accordingly, the base end side of the tension spring 70 is engageable with the head-side engagement part 57.

Furthermore, as shown in FIG. 7, the linkage recess 58 rotatably supporting the linkage shaft 43 of the arm shank 40 is provided on the tip side of the arm head 50. Specifically, the linkage recess 58 is disposed on the arm shank 40 side (left side in the figure) compared to the head-side engagement part 57 in the long-side direction of the arm head 50.

In addition, an opening 58a, which serves as a mounting side where the linkage shaft 43 is mounted, is provided on a side (upper side in FIG. 4 and FIG. 7) opposite to the wiping surface WS side of the linkage recess 58. In an assembled state of the wiper device 10, the opening 58a is covered by the cover member 60. Accordingly, the linkage shaft 43 is prevented from detaching from the linkage recess 58. In addition, since the opening 58a is covered by the cover member 60, a surface of the wiper device 10 becomes smooth, and thus generation of wind noise can be suppressed.

In addition, as shown in FIG. 7 to FIG. 9 and FIG. 11 to FIG. 14, the lock grooves 59 are respectively provided at the pair of lateral surface parts 51 forming the arm head 50. Specifically, when the arm shank 40 is raised with respect to the arm head 50, the pair of lock claws 49a (refer to FIG. 6) provided at the arm shank 40 are capable of respectively entering the inner sides of the lock grooves 59.

The lock grooves 59 are disposed between the fixed body 52 and the linkage recess 58 in the long-side direction (left-right direction in FIG. 7) of the lateral surface parts 51. The respective lock grooves 59 are recessed by a predetermined depth toward the groove part 55 provided at the short-side direction central part of the arm head 50.

The pair of lock grooves 59 provided at the arm head 50 form recessed shapes respectively recessed toward both sides in the wiping direction of the wiper blade 20, and correspond to head-side mating parts and recesses in the disclosure.

In addition, as shown in FIG. 9, the lock groove 59 includes a rotation angle restriction wall part 59a and a lead-in protrusion 59b. Specifically, the rotation angle restriction wall part 59a and the lead-in protrusion 59b are disposed to be opposed to each other in a height direction (up-down direction in the figure) of the arm head 50. The rotation angle restriction wall part 59a is disposed on the wiping surface WS side (lower side in the figure) in the height direction of the arm head 50, and the lead-in protrusion 59b is disposed on a side (upper side in the figure) opposite to the wiping surface WS side in the height direction of the arm head 50.

When the rotation angle of the arm shank 40 with respect to the arm head 50 is β degrees (refer to FIG. 14), the lock claws 49a entered in the inner sides of the lock grooves 59 abut against the rotation angle restriction wall parts 59a (refer to FIG. 13 and FIG. 14). In other words, the lock claws 49a and the rotation angle restriction wall parts 59a respectively have a function of restricting the arm shank 40 from rotating by β degrees or more with respect to the arm head 50.

In addition, the lead-in protrusion 59b includes a stand-up state holding wall part 59c and a tapered surface TP. The stand-up state holding wall part 59c and the tapered surface TP each extend in an extending direction of the lead-in protrusion 59b. The stand-up state holding wall part 59c is disposed on the lock groove 59 side (lower side in the figure), and the tapered surface TP is disposed on a side opposite to the lock groove 59 side, i.e., on a side (upper side in the figure) where the lock claw 49a is led in.

When maintaining the state in which the arm shank 40 stands up by α degrees (refer to FIG. 12) with respect to the arm head 50, the lock claws 49a entered in the inner sides of the lock grooves 59 abut against the stand-up state holding wall parts 59c (refer to FIG. 11 and FIG. 12). In other words, the lock claws 49a and the stand-up state holding wall parts 59c respectively have a function of maintaining the state in which the arm shank 40 stands up by α degrees with respect to the arm head 50, i.e., configuring the wiper device 10 in the lock-back holding state.

Herein, the lock claws 49a provided at the arm shank 40 are capable of entering the inner sides of the lock grooves 59 by overcoming the lead-in protrusions 59b via the tapered surfaces TP. Accordingly, the arm shank 40 can be easily configured in the lock-back holding state with respect to the arm head 50.

The lead-in protrusion 59b forming the lock groove 59 corresponds to a guide protrusion in the disclosure.

Herein, when the wiper device 10 is in the lock-back holding state (refer to FIG. 10 to FIG. 12), the spring force of the tension spring 70 acts in a direction pressing the arm shank 40 toward the wiping surface WS. However, with the spring force of the tension spring 70 alone, the lock claws 49a do not detach from the stand-up state holding wall parts 59c and do not overcome the lead-in protrusions 59b. In other words, the lock grooves 59 and the lock claws 49a are capable of maintaining the state in which the arm shank 40 stands up by α degrees with respect to the arm head 50 against the spring force of the tension spring 70.

Thus, unless an operating force (external force) is applied to collapse the arm shank 40 toward the wiping surface WS, the lock-back holding state of the wiper device 10 is maintained. Accordingly, a replacement work of the wiper blade 20 and the like can be easily performed, and maintainability is improved.

A lock-back angle of the wiper device 10, i.e., an angle on a narrow-angle side of the arm shank 40 with respect to the wiping surface WS (refer to FIG. 2 and FIG. 4), is about 20 degrees.

In addition, although the lock claws 49a of the arm shanks 40 overcome the lead-in protrusions 59b while flexing the sidewall parts 41, as shown in FIG. 6, the lock claws 49a are disposed at the spot of the notch part 44 of the arm shank 40. Accordingly, the portions of the sidewall parts 41 at which the lock claws 49a are provided are capable of being elastically deformed relatively easily. Thus, the lock claws 49a are capable of overcoming the lead-in protrusions 59b relatively easily.

### [Regarding lock-back holding state (α degrees) and rotation angle restriction state (β degrees)]

As shown in FIG. 10 to FIG. 12, upon gripping the arm shank 40, for example, to stand the arm shank 40 up with respect to the arm head 50, the pair of lock claws 49a provided at the arm shank 40 enter the inner sides of the pair of lock grooves 59 provided at the arm head 50. At this time, since the lock claws 49a overcome the tapered surfaces TP of the lead-in protrusions 59b, the lock claws 49a are capable of being disposed on the inner sides of the lock grooves 59 relatively easily.

In this state, upon releasing the hand from the arm shank 40, the arm shank 40 is about to collapse with respect to the arm head 50 due to the spring force of the tension spring 70. However, as indicated by an arrow M1 in FIG. 11, since the lock claws 49a entered in the inner sides of the lock grooves 59 abut against the stand-up state holding wall parts 59c and turn into a mated state, the arm shank 40 is in a rotation restriction state with respect to the arm head 50 against a direction indicated by an arrow R1 in FIG. 12. Thus, the lock-back holding state is created.

At this time, as shown in FIG. 10, the tension spring 70 approaches the top wall part 42 (spring accommodating recess 47). A part (upper side portion in the figure) of the coil part 71 of the tension spring 70 is accommodated in the spring accommodating recess 47.

The coil part 71 is in a non-contact state with respect to the top wall part 42, and neither of the top wall part 42 and the coil part 71 is scratched. In addition, in the lock-back holding state of the wiper device 10, as shown in FIG. 10, when the arm shank 40 is viewed from the wiping direction of the wiper blade 20, an entirety of the tension spring 70 is completely hidden by the pair of sidewall parts 41.

Furthermore, the lock-back angle of the wiper device 10, i.e., the angle (α degrees) on the narrow-angle side of the arm shank 40 with respect to the wiping surface WS, is about 20 degrees. This is to prevent the arm shank 40 from contacting a rear spoiler (not shown) provided on a vehicle side (i.e., to prevent scratching) in the case where the wiper device 10 is hidden by the rear spoiler. Since the wiper blade 20 is capable of being easily attached to and detached from the arm shank 40 by the snap-fit structure, even though the lock-back angle (α degrees) is about 20 degrees, maintainability of the wiper device 10 does not decrease.

In contrast, to return the arm shank 40 to a state collapsed with respect to the arm head 50, i.e., to return the wiper device 10 to the in-use state, an operating force is applied to the arm shank 40 to collapse the arm shank 40 with respect to the arm head 50. Accordingly, the mated state is released between the lock claws 49a and the stand-up state holding wall parts 59c, and the lock claws 49a overcome the lead-in protrusions 59b to detach from the lock grooves 59. Thus, the wiper device 10 turns into the in-use state shown in FIG. 4.

Depending on the vehicle model on which the wiper device 10 is installed, there may be cases where a curvature of the wiping surface WS is large. In such cases, as indicated by a broken line arrow R in FIG. 4, the wiper blade 20 swings significantly around the mounting shaft 45 with respect to the arm shank 40. At this time, as shown by an enlarged portion enclosed by a broken line in FIG. 4, the base end side (right side in FIG. 4) of the wiper blade 20 enters the inner side of the arm shank 40. In other words, the wiper device 10 is also compatible with a wiping surface WS with a large curvature.

In addition, for example, in the case of washing the vehicle in car wash equipment, a relatively large force is applied to the arm shank 40, and the arm shank 40 may be stood up with respect to the arm head 50 to a greater extent than the lock-back holding state (α degrees). In this case, as indicated by an arrow M2 in FIG. 13, the lock claws 49a entered in the inner sides of the lock grooves 59 abut against the rotation angle restriction wall parts 59a and turn into a mated state. Thus, against a direction indicated by an arrow R2 in FIG. 14, the arm shank 40 is restricted from rotating further with respect to the arm head 50, and the rotation angle of the arm shank 40 with respect to the arm head 50 is restricted to β degrees (about 22 degrees). Accordingly, the arm shank 40 can be prevented from contacting vehicle-side components such as the rear spoiler.

As described in detail above, the wiper device 10 of the present embodiment includes: the lock grooves 59 provided at the arm head 50 and recessed toward both sides in the wiping direction of the wiper blade 20; and the lock claws 49a provided at the arm shank 40 and protruding toward both sides in the wiping direction of the wiper blade 20. By concave-convex mating of the lock grooves 59 and the lock claws 49a with each other, the arm shank 40 is restricted from rotating by β degrees (about 22 degrees) or more with respect to the arm head 50, and a state in which the arm shank 40 stands up by α degrees (about 20 degrees), which is smaller than β degrees, with respect to the arm head 50 is maintained.

According, the rotation angle of the arm shank 40 with respect to the arm head 50 can be restricted without increasing the number of components. Thus, for example, in the case of washing the vehicle in car wash equipment, even if a relatively large force is applied to the arm shank 40, the arm shank 40 can be prevented from being stood up by β degrees or more with respect to the arm head 50. Therefore, damage to the wiper device 10 or the vehicle side can be prevented.

In addition, the state (lock-back state) in which the arm shank 40 is stood up by α degrees, which is close to β degrees, with respect to the arm head 50 can be maintained without increasing the number of components. Thus, by configuring in the lock-back holding state, it becomes possible to attach and detach the wiper blade 20 to and from the arm shank 40, and thus it becomes possible to perform maintenance on the wiper device 10 easily.

Furthermore, according to the wiper device 10 of the present embodiment, the lock groove 59 is a recess, the lock claw 49a is a protrusion, and the lock claw 49a is capable of entering the inner side of the lock groove 59. The lock groove 59 includes: the rotation angle restriction wall part 59a against which the lock claw 49a abuts when the rotation angle of the arm shank 40 with respect to the arm head 50 is β degrees; and a stand-up state holding wall part 59c against which the lock claw 49a abuts when maintaining the state in which the arm shank 40 stands up by α degrees with respect to the arm head 50.

Accordingly, it becomes possible to provide a rotation angle restriction function and a lock-back holding function to the lock grooves 59 and the lock claws 49a without increasing the number of components.

In addition, according to the wiper device 10 of the present embodiment, the lock claws 49a are capable of entering the inner sides of the lock grooves 59 by overcoming the lead-in protrusions 59b having the tapered surfaces TP.

Accordingly, the arm shank 40 can be easily configured in the lock-back state with respect to the arm head 50, and maintainability can be improved.

Furthermore, according to the wiper device 10 of the present embodiment, the tension spring 70 pressing the wiper blade 20 to the wiping surface WS is provided between the arm head 50 and the arm shank 40, and the lock grooves 59 and the lock claws 49a maintain the state in which the arm shank 40 stands up by α degrees with respect to the arm head 50 against the spring force of the tension spring 70.

Accordingly, unless an operating force (external force) is applied to the arm shank 40, the lock claws 49a do not overcome the lead-in protrusions 59b, and the mated state between the lock claws 49a and the lock grooves 59 is maintained. Thus, the wiper device 10 can be configured in the lock-back holding state, and maintainability can be improved.

In addition, according to the wiper device 10 of the present embodiment, it becomes possible to improve durability without increasing the number of components, and thus reduction in manufacturing energy can be achieved. Thus, it is possible to achieve, in particular, Goal 7 (ensure access to affordable, reliable, sustainable and modern energy for all) and Goal 13 (take urgent action to combat climate change and its impacts) of the Sustainable Development Goals (SDGs) established by the United Nations.

The disclosure is not limited to the above embodiment, and obviously various modifications may be made within a scope without deviating from the spirit thereof. For example, in the above embodiment, it has been shown that the lock grooves 59 (recesses) are provided at the arm head 50, and the lock claws 49a (protrusions) are provided at the arm shank 40. However, the disclosure is not limited thereto, and it is also possible to provide the lock claws (protrusions) at the arm head 50 and provide the lock grooves (recesses) at the arm shank 40.

In addition, in the above embodiment, it has been shown that a set composed of the lock groove 59 and the lock claw 49a is provided respectively on both sides in the wiping direction of the wiper blade 20. However, the disclosure is not limited thereto, and it is also possible to provide the set composed of the lock groove 59 and the lock claw 49a on one side or the other side only (on single side only) in the wiping direction of the wiper blade 20.

Furthermore, in the above embodiment, the wiper device 10 has been described taking an example of wiping a windshield (rear glass) provided at the back door of a vehicle such as an automobile. However, the disclosure is not limited thereto, and may also be applied to wiper devices that wipe, for example, a front glass of a vehicle such as an automobile, or a glass of aircraft, railway vehicles, construction machinery, etc.

In addition, the material, shape, dimensions, quantity, arrangement spot, etc. of each component in the above embodiment may be configured in any manner as long as the disclosure can be achieved, and are not limited to the above embodiment.

### Reference Signs List

10: wiper device
20: wiper blade
21: linkage member
21a: linkage part
22: blade rubber
23: cover
24: end cap
30: wiper arm
40: arm shank
41: sidewall part
42: top wall part
43: linkage shaft
43a: planar part
44: notch part
45: mounting shaft
46: shank-side engagement part
47: spring accommodating recess
47a: taper part
48: reinforcing rib
49: inner surface part
49a: lock claw (shank-side mating part, protrusion)
50: arm head
51: lateral surface part
52: fixed body
53: reinforcing member
54: protrusion
55: groove part
57: head-side engagement part
58: linkage recess
58a: opening
59: lock groove (head-side mating part, recess)
59a: rotation angle restriction wall part
59b: lead-in protrusion (guide protrusion)
59c: stand-up state holding wall part
60: cover member
70: tension spring (spring)
71: coil part
72: first hook part
73: second hook part
74: straight part
75: inclined part
NT: fastening nut
SH: swing shaft
TP: tapered surface
WS: wiping surface

## Claims

1. A wiper device (10) comprising:
an arm head (50) fixed to a swing shaft (SH);
an arm shank (40) having a base end side rotatably mounted to the arm head (50); and
a wiper blade (20) mounted to a tip side of the arm shank (40) and wiping a wiping surface, wherein
the wiper device (10) being **characterised in that** it further comprises:
a head-side mating part (59) provided at the arm head (50) and recessed or protruding toward at least one side in a wiping direction of the wiper blade (20); and
a shank-side mating part (49a) provided at the arm shank (40) and protruding or recessed toward at least another side in the wiping direction of the wiper blade (20), and
by concave-convex mating of the head-side mating part (59) and the shank-side mating part (49a) with each other, the arm shank (40) is restricted from rotating by a first rotation angle or more with respect to the arm head (50), and a state in which the arm shank (40) stands up by a second rotation angle smaller than the first rotation angle with respect to the arm head (50) is maintained.

2. The wiper device (10) according to claim 1, wherein
the head-side mating part (59) is a recess,
the shank-side mating part (49a) is a protrusion,
the protrusion (49a) is capable of entering an inner side of the recess (59), and
the recess (59) comprises:
a rotation angle restriction wall part (59a) against which the protrusion (49a) abuts with a rotation angle of the arm shank (40) with respect to the arm head (50) being the first rotation angle; and
a stand-up state holding wall part (59c) against which the protrusion (49a) abuts in maintaining the state in which the arm shank (40) stands up by the second rotation angle with respect to the arm head (50).

3. The wiper device (10) according to claim 2, wherein
the protrusion (49a) is capable of entering the inner side of the recess (59) by overcoming a guide protrusion (59b) having a tapered surface (TP).

4. The wiper device (10) according to any one of claims 1 to 3, wherein
a spring pressing the wiper blade (20) to the wiping surface is provided between the arm head (50) and the arm shank (40), and
the head-side mating part (59) and the shank-side mating part (49a) maintain the state in which the arm shank (40) stands up by the second rotation angle with respect to the arm head (50) against a spring force of the spring.

## Patentansprüche

1. Wischvorrichtung (10), umfassend:
einen Armkopf (50), der an einer Schwenkwelle (SH) befestigt ist;
einen Armschaft (40), dessen Basisendseite drehbar am Armkopf (50) angebracht ist; und
ein Wischerblatt (20), das an der Spitzenseite des Armschafts (40) angebracht ist und eine Wischfläche wischt, wobei
die Wischvorrichtung (10) **dadurch gekennzeichnet ist, dass** sie ferner umfasst:
ein kopfseitiges Gegenstück (59), das am Armkopf (50) vorgesehen ist und in Wischrichtung des Wischerblatts (20) zu mindestens einer Seite hin vertieft ist oder vorsteht; und
ein am Armschaft (40) vorgesehenes, in Wischrichtung des Wischerblatts (20) zu mindestens einer anderen Seite hin vorstehendes oder vertieftes schaftseitiges Gegenstück (49a), und
wobei durch konkav-konvexes Ineinandergreifen des kopfseitigen Gegenstücks (59) und des schaftseitigen Gegenstücks (49a) miteinander der Armschaft (40) daran gehindert wird, sich um einen ersten Drehwinkel oder mehr in Bezug auf den Armkopf (50) zu drehen, und ein Zustand, in dem der Armschaft (40) um einen zweiten Drehwinkel, der kleiner als der erste Drehwinkel ist, in Bezug auf den Armkopf (50) aufrecht steht, wird aufrechterhalten.

2. Wischvorrichtung (10) gemäß Anspruch 1, wobei
das kopfseitige Gegenstück (59) eine Vertiefung ist,
das schaftseitige Gegenstück (49a) ein Vorsprung ist,
der Vorsprung (49a) in eine Innenseite der Vertiefung (59) eintreten kann und
die Vertiefung (59) umfasst:
ein Drehwinkelbegrenzungswandteil (59a), an das der Vorsprung (49a) mit einem Drehwinkel des Armschafts (40) in Bezug auf den Armkopf (50) als dem ersten Drehwinkel anliegt; und
ein Standzustands-Haltewandteil (59c), an das der Vorsprung (49a) anliegt, um den Zustand aufrechtzuerhalten, in dem der Armschaft (40) um den zweiten Drehwinkel in Bezug auf den Armkopf (50) aufrecht steht.

3. Wischvorrichtung (10) gemäß Anspruch 2, wobei
der Vorsprung (49a) in die Innenseite der Vertiefung (59) eintreten kann, indem er einen Führungsvorsprung (59b) mit einer konischen Oberfläche (TP) überwindet.

4. Wischvorrichtung (10) gemäß irgendeinem der Ansprüche 1 bis 3, wobei
eine Feder, die das Wischerblatt (20) gegen die Wischfläche drückt, zwischen dem Armkopf (50) und dem Armschaft (40) vorgesehen ist und
das kopfseitige Gegenstück (59) und das schaftseitige Gegenstück (49a) den Zustand aufrechterhalten, in dem der Armschaft (40) um den zweiten Drehwinkel in Bezug auf den Armkopf (50) gegen die Federkraft der Feder aufrecht steht.

## Revendications

1. Un dispositif d'essuie-glace (10) comprenant :
une tête de bras (50), fixée à un arbre pivotant (SH) ;
une tige de bras (40), ayant un côté d'extrémité de base monté de manière rotative sur la tête de bras (50) ; et
une lame d'essuie-glace (20), montée sur un côté d'extrémité de la tige de bras (40) et essuyant une surface à essuyer,
le dispositif d'essuie-glace (10) étant **caractérisé en ce qu'**il comprend en outre :
une partie d'accouplement (59) côté tête, prévue au niveau de la tête de bras (50) et en retrait ou en saillie vers au moins un côté dans une direction d'essuyage de la lame d'essuie-glace (20) ; et
une partie d'accouplement (49a) côté tige, prévue au niveau de la tige de bras (40) et en saillie ou en retrait vers au moins un autre côté dans la direction d'essuyage du balai d'essuie-glace (20), et
par un accouplement concave-convexe de la partie d'accouplement (59) côté tête et de la partie d'accouplement (49a) côté tige l'une avec l'autre, la tige de bras (40) est empêchée de tourner d'un premier angle de rotation ou plus par rapport à la tête de bras (50), et un état, dans lequel la tige de bras (40) est dressée selon un deuxième angle de rotation plus petit que le premier angle de rotation par rapport à la tête de bras (50), est maintenu.

2. Le dispositif d'essuie-glace (10) selon la revendication 1, dans lequel
la partie d'accouplement (59) côté tête est un évidement,
la partie d'accouplement (49a) côté tige est une saillie,
la saillie (49a) est apte à pénétrer dans un côté intérieur de l'évidement (59), et l'évidement (59) comprend :
une partie de paroi (59a) de restriction d'angle de rotation, contre laquelle la saillie (49a) vient en butée, l'angle de rotation de la tige de bras (40) par rapport à la tête de bras (50) étant le premier angle de rotation ; et
une partie de paroi (59c) de maintien en position dressée, contre laquelle la saillie (49a) vient en butée lors du maintien de l'état dans lequel le bras (40) s'étend en position dressée selon le deuxième angle de rotation par rapport à la tête de bras (50).

3. Le dispositif d'essuie-glace (10) selon la revendication 2, dans lequel
la saillie (49a) est apte à pénétrer à l'intérieur de l'évidement (59) en surmontant une saillie de guidage (59b) ayant une surface effilée (TP).

4. Le dispositif d'essuie-glace (10) selon l'une quelconque des revendications 1 à 3, dans lequel
un ressort pressant la lame d'essuie-glace (20) contre la surface à essuyer est prévu entre la tête de bras (50) et la tige de bras (40), et
la partie d'accouplement (59) côté tête et la partie d'accouplement (49a) côté tige maintiennent l'état dans lequel la tige de bras (40) est dressée selon le deuxième angle de rotation par rapport à la tête de bras (50) à l'encontre de la force élastique du ressort.
